# EUROPEAN PATENT SPECIFICATION

(11) **EP 2 056 669 B1**
(45) Date of publication and mention of the grant of the patent: **23.11.2016**
(21) Application number: 07747306.4
(22) Date of filing: 08.05.2007
(51) Int. Cl.: A01J 5/04, A01J 7/02

(54) **MILKING CLAW DEVICE OPTIONALLY WITH CLEANSING FUNCTION**
MILCHSAMMELVORRICHTUNG, WAHLWEISE MIT REINIGUNGSFUNKTION
DISPOSITIF DE GRIFFE DE TRAITE EQUIPE EVENTUELLEMENT D'UNE FONCTION DE NETTOYAGE

(30) Priority: 08.05.2006 NL 1031764
(43) Date of publication of application: 13.05.2009
(73) Proprietor: Dietrich, Jacob Hendrik Berthold, 7213 TE Gorssel (NL)
(72) Inventor: DIETRICH, Berthold, Johannes, Theodorus, NL-7213 XM Gorssel (NL)
(74) Representative: Geurts, Franciscus Antonius
(86) International application number: PCT/NL2007/000124
(87) International publication number: WO 2007/129888

(56) References cited:
- WO-A-02/23976
- DE-A1- 1 582 939
- US-A- 3 014 455

## Description

### BACKGROUND OF THE INVENTION

The invention relates to a milking claw device. The invention furthermore relates to a method for milking cows.

Milking claw devices are generally known. They form a collection chamber for milk coming from the teats of a cow and are connected to a discharge line to a central milk storage. The milking claw device has been provided with four milk tubes on which teat cups have been arranged. Provisions for operating the usually pneumatically operated teat cups may have been arranged on the milking claw device. Provisions for supplying cleansing agent, such as iodine, and subsequently rinsing fluid, such as water and air, to the teat cups or to the connection thereof to the milk tubes in question, may have furthermore been arranged. Such an arrangement is known from WO 99/66787, WO 02/23976 and WO 2005/0439886. DE 1.582.939 discloses a milking claw device according to the preamble of claim 1.

After milking a cow cleansing fluid or disinfectant is discharged to the teats in the teat cups. The teat cups are then disconnected from said cow's teats. The teat cups are then meant to hang down with their openings, which is made possible by the flexible milk tubes. If the rinsing liquid is subsequently discharged to the teat cups or their connection to the milk tubes, said liquid including a residue of cleansing agent with contaminations will be able to flow out of the teat opening of the teat cups due to gravity. The teat cups can then placed on the teats of a next cow to milk her.

Although said technique works satisfactory per se, it may happen that a teat cup, despite the flexibility of the milk tube, does not end up upside-down after disconnection. A possible result may be that the rinsing/cleansing liquid discharged does not exit the teat opening of the teat cup, but instead flows in the direction of the milk tube and milking claw. In WO 02/23976 it is suggested to provide a drainage near the piston with which rinsing/cleansing liquid is discharged in the transitional area from the teat cup to the milk tube. Due to the placement of the pistons near the teat cups they follow the movements of the teat cups and as a result may contact/hit other objects, which may cause damage/failures. If the piston becomes defective and inadvertently moves to a retracted position, the passage to the milk tube is open to rinsing liquid with cleansing residues, which as a result may end up in the milk tube and the milking claw and thus in the discharge line and the central milk storage.

### SUMMARY OF THE INVENTION

It is an object of the invention to improve on this.

It is an object of the invention to provide a device of the type mentioned in the preamble, with which contamination of milk passages from teat cup to central milk storage can be counteracted.

At least one of these objects is achieved according to the invention by a milking claw device for a milking device according to claim 1.

The interception means arranged on the milking claw device follow the milking claw device, which is relatively stationary, as a result of which the risk of damage is reduced. The valve for the milk discharge moreover provides a safety against cleansing agent residue etc. flowing through to or in the discharge line, wherein one central provision will suffice instead of one for each milk tube.

In a simple embodiment the first valve is active upstream from or in the second connection.

In one embodiment the interception means have been arranged to be active in a bottom area of the collection chamber, in which way use can be made of the lowest point of the chamber, so that a full discharge can be ensured.

Closing off during milking can be enhanced when the second valve is biassed to a closed position.

In a compact embodiment the milking claw device comprises a milking claw housing forming the collection chamber and also provided with the first connections and/or the second connection, wherein the interception means have been arranged in or on the housing.

In a further development the interception means comprise a barrier body, and operation means are provided for moving the barrier body between an inactive position, in which the flow paths are through-going, and an active position, in which the flow paths are interrupted and a diversion passage has been realised. In one embodiment thereof the barrier body comprises a reciprocally movable body, such as a piston.

In case said milking claw housing is present, said housing may - in a manner known per se - have an upper part, on which connections for lines for operation and/or for cleansing/rinsing the teat cups have been connected, running to the teat cups and to air sources and/or cleansing/rinsing liquid sources. In a compact and simple embodiment this can be made use of, wherein the operation means for the barrier body have at least partially been arranged in the upper part of the milking claw housing. The fluid pressure source for the lines that are present anyway can be utilised for moving the barrier body.

The upper part may form a part, optionally including lid, that can be placed separately, preferably removably, on the milking claw housing.

In a simple arrangement the barrier body is situated centrally with respect to the collection chamber.

In one embodiment the milking claw housing comprises an upper half with the first connections and the operation means, and a lower half with the second connection and a transitional surface from the collection chamber to the access of the second connection, which transitional surface as regards shape mates the barrier body, wherein the lower half and the upper half are detachably connected to each other and positioned by means of a circumferential closure extending about the collection chamber, wherein the operation means are adapted for keeping the barrier body positioned in the active position with respect to the transitional surface. By loosening the circumferential closure the milking claw housing can be opened to be cleaned. When subsequently closing it the barrier body is immediately positioned again for use.

In an embodiment thereof the operation means are adapted for keeping a side wall of the barrier body extending in the direction of movement, against the transitional surface. With the side wall the positioned barrier body then closes off the access to the second connection.

In a further development of the milking claw device according to the invention it has been provided with means for supplying cleansing and/or rinsing liquid to the collection chamber, such as iodine and water, respectively. In this way the collection chamber can be cleansed as well, so that contamination/pollution of the discharge line is prevented to a great extent.

In one embodiment thereof the means for supplying cleansing and/or rinsing liquid have been arranged spaced apart from the interception means.

In another, preferred embodiment thereof, the means for supplying cleansing and/or rinsing liquid have been arranged near or at the location of the interception means. The interception means then also serve to lead away the liquid used for rinsing and/or cleansing the collection chamber.

In one embodiment the means for supplying cleansing and/or rinsing liquid have been provided with outlets directed at the first connections, as a result of which those as well can be rinsed and cleansed.

In a simple embodiment the means for supplying cleansing and/or rinsing liquid comprise outlets that have been provided on the first valve, particularly said reciprocally movable body.

According to a further aspect the invention provides a milking claw device for a milking device, provided with a milk collection chamber and a number of first connections for milk supply lines and a second connection for a milk discharge line, furthermore provided with a branch passage for discharging liquid from the milking claw device and with a first valve for the milk discharge line which valve is active downstream from the branch passage.

In one embodiment a second valve is present for closing off the branch passage.

In a simple arrangement the first and second valves have been arranged for operation of one of the valves by the other, preferably such that the first valve brings the second valve in the open position during the transition of the first valve to the closing position.

The first valve may comprise a linearly reciprocally movable closing body.

The first valve can be utilised additionally when it has been provided with means for discharging a cleansing and/or rinsing liquid, such as iodine and water, respectively, in the collection chamber.

The invention furthermore provides a milking claw device according to the invention, provided with teat cups and milk tubes that form the connection between the first connections and the teat cups.

The invention furthermore provides a milking installation provided with a number of milking claw devices according to the invention and a central milk storage connected to the milk discharge lines of the milking claw devices.

From a further aspect the invention provides a method for milking cows as described in claim 14.

The milking claw is thus internally cleansed and rinsed after each milking process, after each milked cow. Cross-infection is thus counteracted, because the bacteria such as staphylococcus aureus, that have ended up with the milk in the collection chamber during a first milking round, do not get the opportunity to return in the milk tube and a teat cup connected thereto.

The aspects and measures described in this description and claims of the application and/or shown in the drawings of this application may where possible also be used individually. Said individual aspects, such as leading residues of cleansing/rinsing liquid away from the milk tubes and the rinsing of the milk collection chamber and other aspects, may be the subject of divisional patent applications relating thereto. This particularly applies to the measures and aspects described per in the sub claims.

### SHORT DESCRIPTION OF THE DRAWINGS

The invention will be elucidated below on the basis of an exemplary embodiment shown in the attached drawings, in which:
Figure 1 shows a view of a first exemplary embodiment of a milking claw device according to the invention;
Figure 2 shows a schematic, partial cross-section of the milking claw device of figure 1 in a first stage of use;
Figure 3 shows the milking claw device of figure 2, in a transitional stage of use in a slightly different cross-section;
Figure 4 shows the milking claw device of figure 3, in a next stage of use;
Figure 5 shows a view of a second exemplary embodiment of a milking claw device according to the invention;
Figure 6 shows a schematic, partial cross-section of the milking claw device of figure 5, in a first stage of use;
Figure 7 shows the milking claw device of figure 6, in a transitional stage of use in a slightly different cross-section; and
Figure 8 shows the milking claw device of figure 7 in a next stage of use.

### DETAILED DESCRIPTION OF THE DRAWINGS

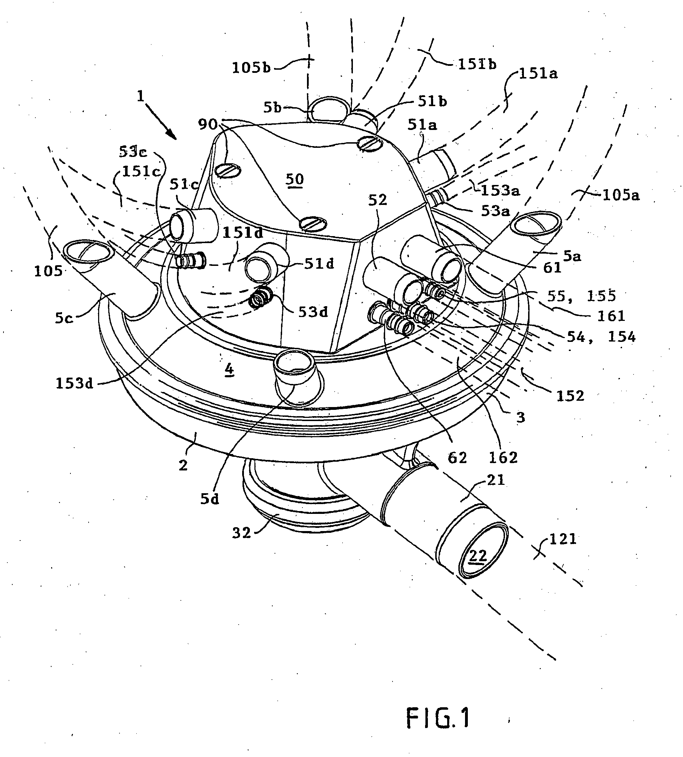

The milking claw device 1 according to a first exemplary embodiment as shown in figures 1-4 comprises a milking claw housing 2, having an inside 23 defined by a bowl-shaped wall 3 that is provided with an upper circumferential edge 24, and a lid 4 that is provided with a pending circumferential edge 25, placed airtight on the upper edge 24 of the bowl 3. In the bottom area of the bowl 3 a spout 21, defining a passage 22, is integrally formed. A schematically shown milk discharge line 121 can be connected to the spout 21.

Upstream from the spout 21 an opening 26 is provided in the bottom of the bowl 3, in which opening a valve 28 provided with a convex disk 27, is arranged. At the side facing away from the convex side, the valve 28 is provided with an integrally formed sleeve 29, in which a compression spring 30 is accommodated. The compression spring 30 on the one hand supports against the inner surface of the valve 28, which inner surface is opposite the convex surface, and on the other hand against an annular shoulder 31 of a cap 32. The cap 32 is provided with a collar 34 that can be snapped fixed onto a collar 33 formed at the bottom of the bowl 3. The cap 32 may optionally be removed, when necessary, to additionally clean the cap 32 and the opening 26.

Within the collar 34, the cap 32 is provided with one or more passages 36 that is/are in connection with an annular chamber 37 formed between the valve 28 and the collar 33.

The lid 4 is provided with four spouts 5a-d that form passages 20a-d to the inside 23 of the milking claw housing 2, and to which the milk tubes 105a-d, schematically shown in figure 1, can be connected. Said milk tubes 105a-d are connected to teat cups that are not shown and receive the milk therefrom.

An upper part 50 is detachably attached to the lid 4 by means of screws 90, which upper part together with the lid 4 may form a replaceable unit, which for instance may replace a conventional lid unit placed on the bowl 3.

The upper part 50 substantially serves as connection and passage of various operation lines and operation fluid, respectively. In this example (figure 1) can be distinguished spouts 51a-d for vacuum lines 151a-d to the teat cups, in order to move the linings of the teat cups in the manner known per se for milking. Within the upper part 50 the spouts 51a-d are in connection with a spout 52 to which a vacuum/air line 152 is connected leading to a vacuum source that is not shown.

Immediately below the spouts 51a-d the upper part is provided with spouts 53a-d, to which partially shown tubes 153a-d are connected that lead to the teat cups in question or parts of the milk tubes 105a-d connecting thereto, in order to supply cleansing agent with pressurised air and/or a water/pressurised air mixture thereto. Within the upper part 50 the spouts 53a-d are in connection with a passage 56 via four ducts 59a-d extending upwardly inclined, which passage 56 is in line with a spout 54, to which a tube 154 is connected that is in connection to a water/air source that is not shown.

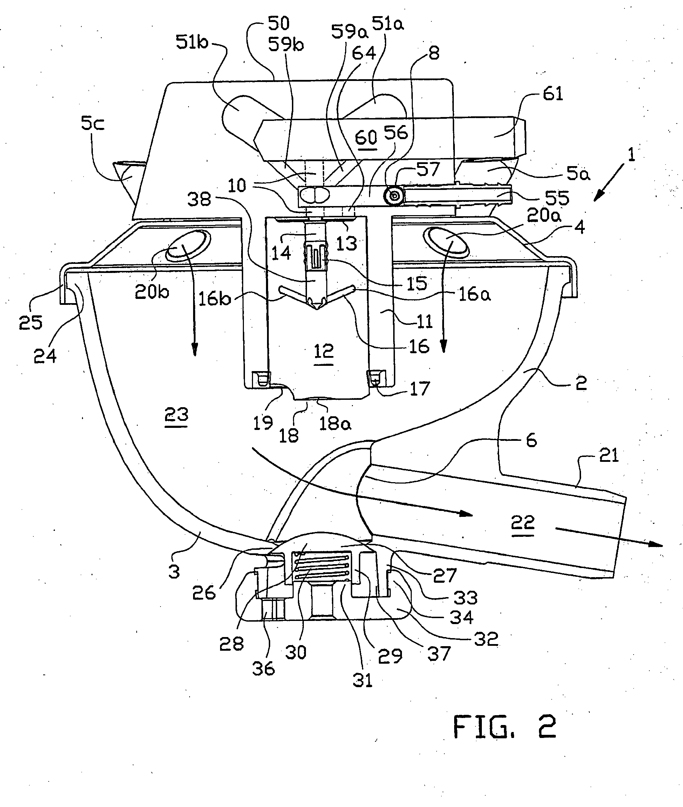

The upper part 50 is also provided with a spout 55 for connection to a source of pressurised air with cleansing agent, such as iodine, via line 155, wherein via a transverse passage 57 in the upper part 50, the spout 55 is internally in connection with the passage 56 and thus with the ducts 59a-d and thus (also) with the spouts 53a-d. As shown in figure 2, the transverse passage 57 can be closed off by a valve 8.

The upper part 50 moreover is provided with a centrally integrally formed downwardly extending sleeve 11, extending through the lid 4 to halfway into the inner space 23 of the milking claw housing 2. At the lower end, at the inner surface, the sleeve 12 is provided with sealing ring 17. A free piston 12 is arranged in the sleeve 12 so as to be able to move up and down, which piston 12 at the lower end is provided with an end surface 18 provided with a small concave surface 18a, and, as considered in the drawing (figure 2), with a recess 19 on the left edge. The piston 12 is accommodated within the sleeve 11 so as to fit snugly, wherein the ring 17 seals airtight against the surface of the piston 12.

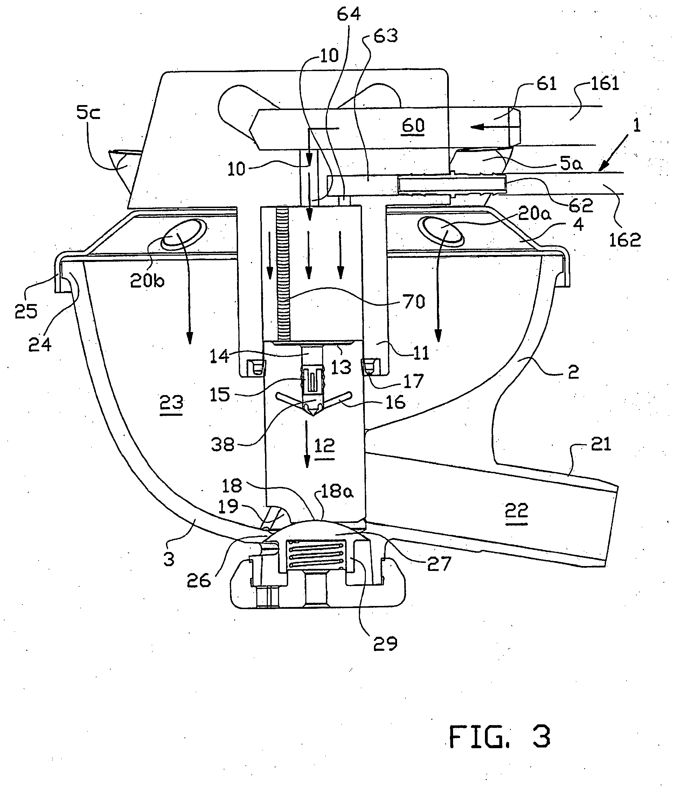

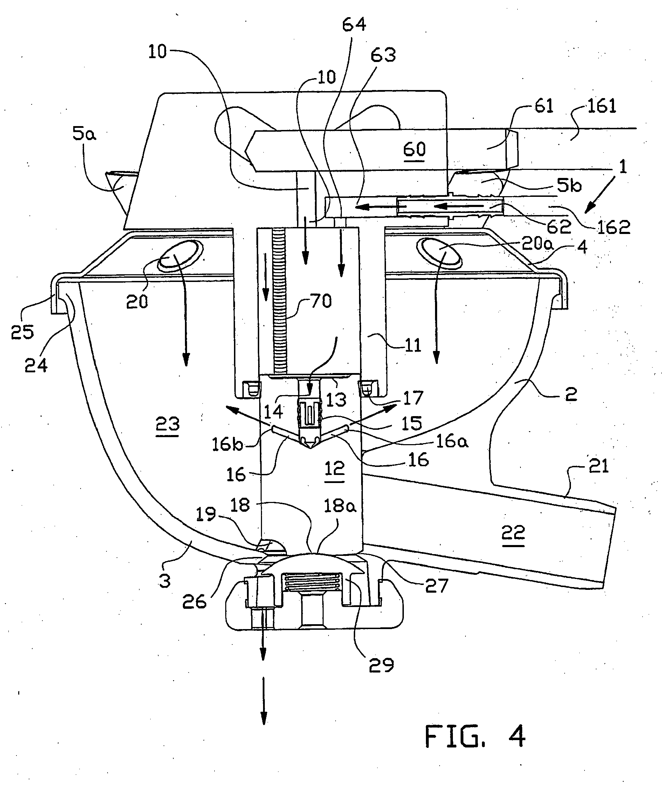

In the upper end the piston 12 is provided with a recess 13, which is spaced apart from the edge of the upper end of the piston 12. In the centre the recess 13 changes into a vertical bore hole 14, in which a one-way valve 15 is arranged. Below the one-way valve 15 there is a distribution chamber 38, to which ducts 16 connect that are oriented radially and upwardly inclined. With their outlets 16a-d, the ducts 16 extend fully or partially in the direction of the openings 20a-d of the spouts 5a-d. Alignment in circumferential direction of the piston 12 within the sleeve 11 is ensured by one or more ribs 70 in the inner surface of the sleeve 11, that cooperate(s) with a groove or grooves (not shown) in the circumferential surface of the piston 12, see figures 3 and 4, in order to prevent the piston 12 from rotating and the outlets 16a-d to retain their orientation.

At the upper side the sleeve 11 is bounded by the upper part 50, in which a vertical passage 10 is disposed, which forms a connection with a passage 60 provided in the upper part which passage is in connection with spout 61 on the upper part 50. The spout 61 is connected to a tube 161 that leads to a vacuum/pressure source (not shown). On the upper part 50 a spout 62 is furthermore provided, to which a line 162 can be connected for supplying cleansing agent/pressurised air. In the inside of the upper part 50 the spout 62 is in connection with passage 63 that ends in passage 64 to the inside of the sleeve 11.

When operative the milking claw device 1 of the preceding figures can be used as follows.

During milking the milking claw device 1 hangs below the cow's udder, and the milk tubes 105a-d are connected to the teats of the cow's udder via teat cups that are not shown. Via the line 152 the tubes 151 a-d are alternately put under pressure/at a vacuum, so that a milking motion is carried out in the teat cups. The milk discharged as a result thereof flows via the milk tubes 105a-d, the spouts 5a-d into the inside 23 of the milking claw housing 2, and is discharged via the spout 21, via the milk discharge line 121 to a central storage.

When the milking course with the cow in question can be stopped, the line 152 is no longer activated. Pressurised air with a cleansing agent, such as iodine, is indeed discharged to the teats and optionally the inside of the teat cups via the line 155, the spout 55, the passages 57, 56, ducts 59a-d, spouts 53 and tubes 153a-d. Subsequently the valve 8 is closed, and via the tube 154, the spout 54, the passage 56, the ducts 59a-d and the spouts 53a-d and the tubes 153a-d, a water/air mixture, optionally pulsating, is discharged to the inside of the teat cups and optionally to connected areas of the milk tubes 105a-d. With a first pressurised air pulse the teat cups have first been uncoupled from the teats.

Due to the flexibility of the milk tubes 105a-d, the teat cups will usually hang downwards. The cleansing agent and the rinse water will then flow out of the teat cups in the direction away from the milk tubes 105a-d. When a teat cup, however, remains standing up (inclined) straight, for whatever reason, cleansing agent and rinse water will able to flow through the tubes 105a-d into the inner space 23 of the milking claw housing 2 and from there via the spout 21 into the milk discharge line 121.

To prevent such discharge via the milk line 121, the vacuum/pressure source on the tube 161 is activated, and the tube 161 is put under pressure, as a result of which via the passage 60, 10 the space above the recess 13 is put under pressure, and the piston 12 is urged downwards. The piston 12 then moves from the position shown in figure 2 to the position shown in figure 3, in which the lower surface 18 abuts the convex surface of valve disk 27, wherein concave surface section 18a fits thereon. The piston 12 moves further downwards, under the influence of the pressure on tube 161, so that the valve 28 moves further downwards, counter the pension of the compression spring 30. Thus the opening 26 is released, where an annular passage is formed, which is in fluid connection with the annular chamber 37 and the passage 36. As can be seen in the figures 3 and 4 the surface of the piston 12 contacts the upper edge 6 of the beginning of the spout 21, in the inside 23 of the milking claw housing 2.

In the position of figure 4 it is achieved that substances, such as cleansing agent coming from the teat cups and/or rinse water coming from the teat cups, do not end up in the -presently closed off- milk discharge line 121, but at the lowest point of the milking claw housing 2, via the passage 26, 27 and 36 flow out of the milking claw device 1.

Additional security against contamination can be achieved when in the expanded condition of the piston, shown in figure 4, the line 162 is also activated, as a result of which air/water mixture ends up in the space above the piston 12 via the spout 62 (see figures 3 and 4), the passage 63, and the passage 64 and is squirted out upwardly in the inner space 23 of the milking claw housing 2, at least also partially in the openings 20 of the spouts 5a-d, via the passage 14, the one-way valve 15, the ducts 16 and outlets 16a. In this way the inside 23 of the milking claw housing 2 is rinsed, and optionally connected spouts 5a-d, and connected parts of the milk tubes 105a-d. The rinse water flows back of its own accord, to the bottom area of the milking claw housing 2 and deflects in the same manner as described above, via the passage 26, 27 and 36. Thus it is achieved that the entire path of teat cup, milk tube, connection for it and collection chamber can be cleansed/rinsed. In addition or alternatively cleansing agent, such as iodine, can be supplied, if a suitable connection for it is provided on the upper part 50, which connection is then connected to the passage 63/64. Optionally the connection 62 can be used for that purpose, in that case connected to a source of cleansing liquid.

The cleansing and/or rinsing course can be carried out in a simple timesaving manner after each milking course. In this way cross-infection is further prevented.

After the rinsing course the tube 161 is put at a vacuum, as a result of which the piston 12 will move upwards. The one-way valve 15 prevents that air is sucked in from the inside 23. After the piston 12 has returned to the position of figure 2, and under the influence of the compression spring 30 the valve 28 has also moved back to close off the opening 26 liquid-tight, a next milking course can be started.

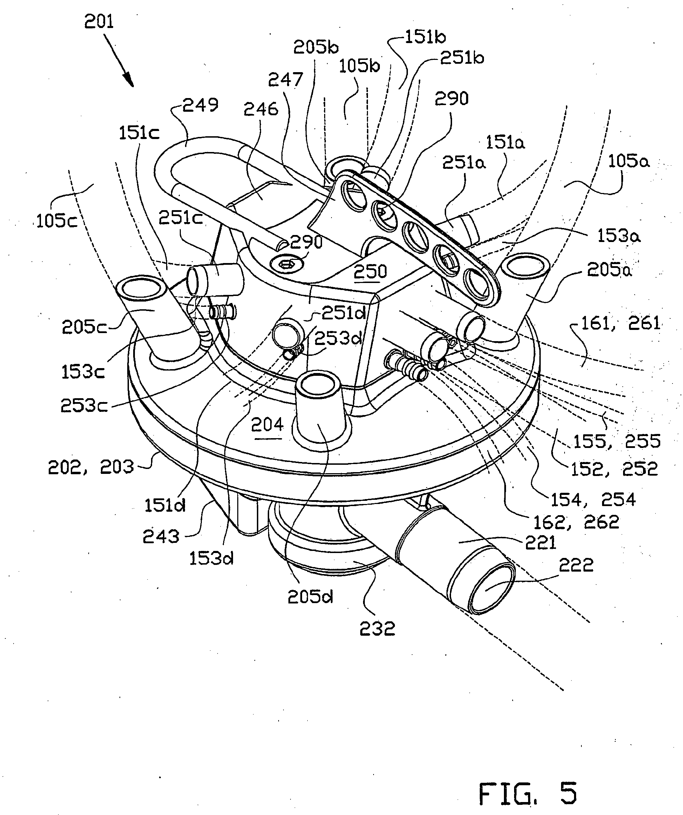

Figures 5-8 show a milking claw device 201 according to a second exemplary embodiment of the invention. Said milking claw device 201 has the same tubes and lines as the milking claw device 1 according to the first embodiment, and comprises a milking claw housing 202 having an inside 223 defined by a bowl-shaped wall 203 and a lid 204. The wall 203 is provided with an upper circumferential edge 224 having a circumferential external shoulder edge 240, the lid 204 is provided with a circumferential edge 225 that is radially recessed and oriented downward and has an external thread 238. The circumferential edge 224 of the wall 203 is fittingly accommodated within the circumferential edge 225 of the lid 204, wherein the shoulder edge 240 supports airtight on the circumferential edge 225.

The circumferential edge 224 is provided with a cam 265 that falls in a recess 266 in the circumferential wall 225. Said interengagement ensures an index, as a result of which in circumferential direction the wall 203 can be secured to the lid 204 in one position only. The wall 203 is retained in its place by a wrapping ring or circumferential closure 241 that engages behind the shoulder edge 240 and which by rotation about the thread 238 is secured to the lid 204.

In the bottom area of the bowl 203 a spout 221, defining a passage 222, is integrally formed. A schematically shown milk discharge line 121 can be connected to the spout 221. Upstream from the spout 221 an opening 226 is provided in the bottom of the bowl 203, in which opening a valve 228 provided with a flat disk 227 is arranged. At the bottom side the valve 228 is provided with an integrally formed sleeve 229, in which a compression spring 230 is accommodated. The compression spring 230 on the one hand supports against the inner surface of the valve 228, and on the other hand is partially confined in a sleeve 231 at a cap 232.

The cap 232 is made of a shape-retaining, resilient material, such as rubber, and is provided with a collar 234 that can be snapped fixed or pressed fixed around a collar 233 formed at the bottom of the bowl 203. The cap 232 may optionally be removed, when necessary, to additionally clean the cap 232 and the opening 226. Within the collar 234 the cap 232 is provided with one or more passages 236 that is/are in connection with an annular chamber 237 formed between the valve 228 and the collar 233.

Opposite the spout 221, at the outer side of the wall 203, a box-shaped container 242 having internal corrugations has been formed. In said container 242 a buffer rubber 243 has been fastened from below, which buffer rubber 243 at the outer side is provided with a convex abutting surface 244 of which the lower edge 245 is situated at approximately the same level as the bottom side of the cap 232. The abutting surface 244 has a contour which in the cross-section shown, substantially corresponds with the external shape of the wall 203. The buffer rubber 243 prevents that the cap 232 hits the ground or drags over the ground when the milking claw device 201 is pulled away from underneath a cow.

The lid 204 is provided with four spouts 205a-d that form passages 220a-d to the inside 223 of the milking claw housing 2, and to which the milk tubes 105a-d schematically shown in figures 1 and 5, can be connected. An upper part 250 is detachably attached to the lid 204 by means of screws 290. The upper part 250 together with the lid 204 may form a replaceable unit, which for instance may replace a conventional lid unit placed on the bowl 203. At the upper side of the upper part 250 a metal plate 246 has also been screwed with the screws 290, to which plate 246 a draw bracket 249 and a suspension bracket 247 provided with a series of suspension holes 248a-e are attached. During milking, the milking claw device 201 hangs from one of the suspension holes 248a-e beneath a cow, and can be pulled away from underneath the cow using the draw bracket 249. By choosing one of the suspension holes 248a-e, a tilting of the milking claw device 201 of less than 20° to the horizontal position shown can be maintained.

The upper part 250 substantially serves as connection and passage of various operation lines and operation fluid, respectively. In this example (figure 5) can be distinguished spouts 251a-d for the vacuum lines 151a-d to the teat cups. Within the upper part 250 the spouts 251a-d are in connection with a spout 252 to which the vacuum/air line 152 to the vacuum source is connected.

Immediately below the spouts 251 a-d the upper part 250 is provided with spouts 253a-d, to which partially shown tubes 153a-d are connected that lead to the teat cups in question or parts of the milk tubes 105a-d connecting thereto, in order to supply cleansing agent with pressurised air and/or a water/pressurised air mixture thereto. Within the upper part 250 the spouts 253a-d are in connection with a passage 256 via four upwardly extending ducts 259a-d, which passage 256 is in line with a spout 254, to which the tube 154 to the water/air source that is not shown is connected.

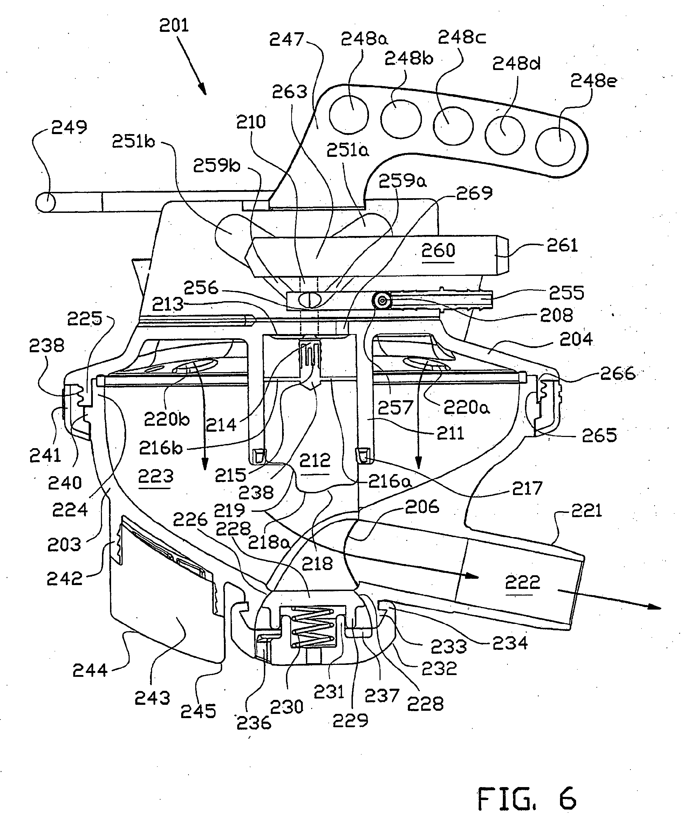

The upper part 250 is also provided with a spout 255 for connection to the source of pressurised air with cleansing agent, such as iodine, via the line 155, wherein via a transverse passage 257 in the upper part 250, the spout 255 is internally in connection with the passage 256 and thus with the ducts 259a-d and thus (also) with the spouts 253a-d. As shown in figure 6, the transverse passage 257 can be closed off by a valve 208.

The upper part 250 moreover is provided with a centrally integrally formed downwardly extending sleeve 211, extending through the lid 204 to halfway into the inner space 223 of the milking claw housing 202. At the lower end, at the inner surface, the sleeve 211 is provided with sealing ring 217. A free piston 212 is arranged in the sleeve 211 so as to be able to move up and down, which piston 212 at the lower end is provided with an end surface 218 provided with a small concave surface 218a, and, as considered in the drawing (figure 6), with a recess 219 on the left edge. The piston 212 is accommodated within the sleeve 211 so as to fit snugly, wherein the ring 217 seals airtight against the surface of the piston 212.

At the upper end the piston 212 is provided with a recess 213, which is spaced apart from the edge of the upper end of the piston 212. In the centre the recess 213 changes into a vertical bore hole 214, in which a one-way valve 215 is arranged. Below the one-way valve 215 there is a distribution chamber 238, to which radially oriented ducts 216 connect. Alignment in circumferential direction of the piston 212 within the sleeve 211 is ensured by aligning means (not shown) between the piston 212 and the sleeve 211, in order to prevent rotation of the piston 212 about its axis.

At the upper side the sleeve 211 is bounded by the upper part 250, in which a vertical passage 210 is disposed, which forms a connection with a passage 260 provided in the upper part which passage is in connection with spout 261 on the upper part 250. The spout 261 is connected to the tube 161 to the vacuum/pressure source (not shown). On the upper part 250 a spout 262 is furthermore provided, to which the line 162 can be connected for supplying cleansing agent/pressurised air. In the inside of the upper part 250 the spout 262 is in connection with passage 263 that ends in passage 264 to the inside of the sleeve 211.

The operation of the milking claw device 201 according to the second embodiment is comparable to the operation of the milking claw device 1 according to the first embodiment. When operative the milking claw device 201 according to figures 5-8 can be used as follows.

During milking the milking claw device 201 hangs from the bracket 247 below the cow's udder, and the milk tubes 105a-d are connected to the teats of the cow's udder via teat cups that are not shown. Via the line 152 the tubes 151a-d are alternately put under pressure/at a vacuum, so that a milking motion is carried out in the teat cups. The milk discharged as a result thereof flows via the milk tubes 105a-d, the spouts 205a-d into the inside 223 of the milking claw housing 202, and is discharged via the spout 221, via the milk discharge line 121 to the central storage.

When the milking course with the cow in question can be stopped, the line 152 is no longer activated. Pressurised air with a cleansing agent, such as iodine, is indeed discharged to the teats and optionally the inside of the teat cups via the line 155, the spout 255, the passages 257, 256, ducts 259a-d, spouts 253 and tubes 153a-d. Subsequently the valve 208 is closed, and via the tube 154, the spout 254, the passage 256, the ducts 259a-d and the spouts 253a-d and the tubes 153a-d a water/air mixture, optionally pulsating, is discharged to the inside of the teat cups and optionally connected areas of the milk tubes 105a-d. With a first pressurised air pulse the teat cups have first been uncoupled from the teats.

Due to the flexibility of the milk tubes 105a-d, the teat cups will usually hang downwards. When, however, a teat cup remains standing up (inclined) straight, for whatever reason, cleansing agent and rinse water will able to flow through the tubes 105a-d into the inner space 223 of the milking claw housing 202 and from there via the spout 221 into the milk discharge line 121.

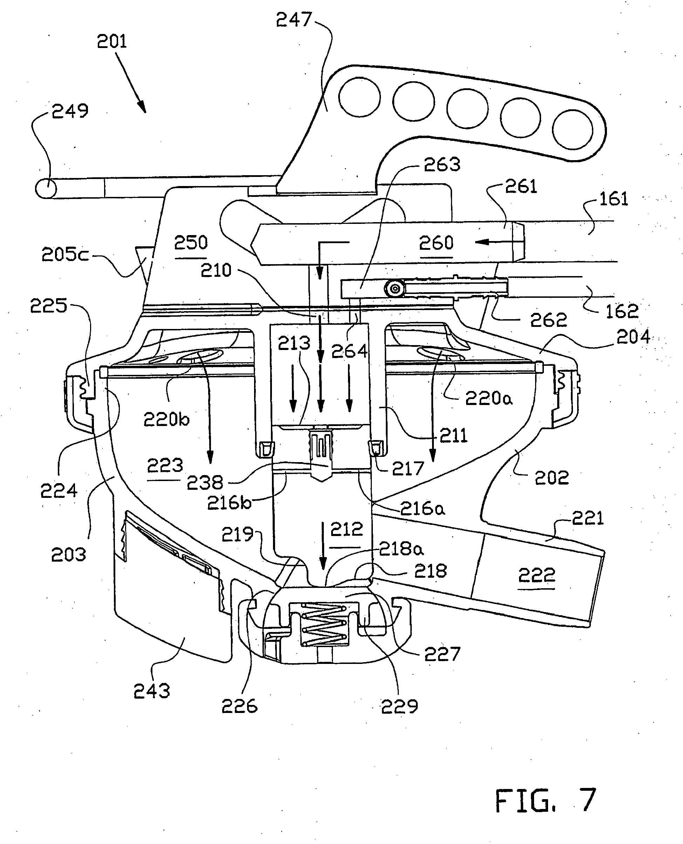

To prevent said discharge via the milk line 121 the vacuum/pressure source on the tube 161 is activated, and the tube 161 is put under pressure, as a result of which via the passage 260, 210 the space above the recess 213 is put under pressure, and the piston 212 is urged downwards. The piston 212 then moves from the position shown in figure 6 to the position shown in figure 7, in which the small convex surface 218a abuts the surface of valve disk 227. The piston 212 moves further downwards, under the influence of the pressure on tube 161, so that the valve 228 moves further downwards, counter the pressure of the compression spring 230. Thus the opening 226 is released, where an annular passage is formed, which is in fluid connection with the annular chamber 237 and the passage 236.

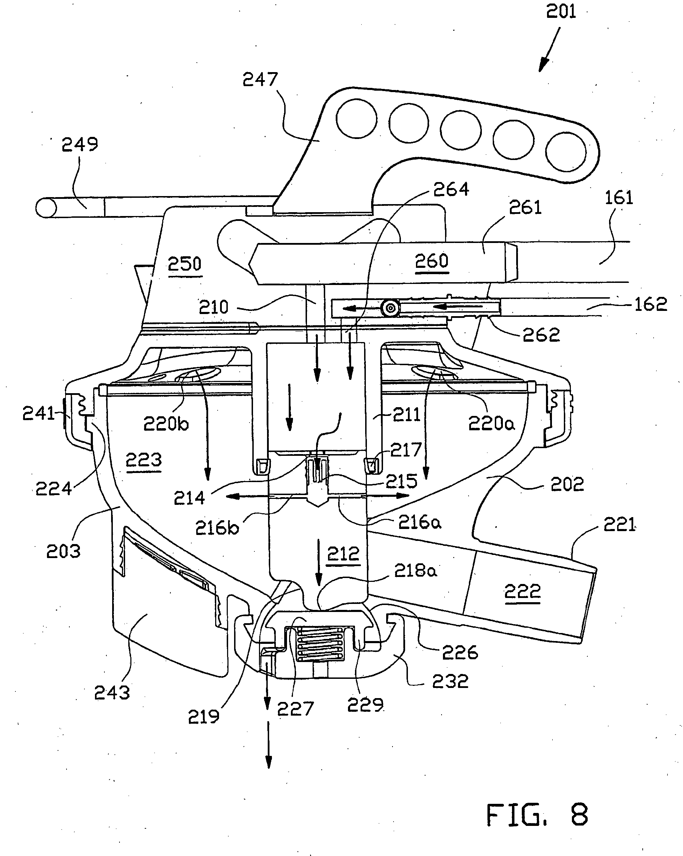

As can be seen in the figures 7 and 8 the wrapping ring or circumferential closure 241 in cooperation with the cam 265 in the recess 266, ensures a fixedly positioned connection between the lid 204 and the wall 203. The sleeve 211 and as a result the piston 212 are thus correctly positioned in axial direction with respect to the upper edge 206 (transitional surface) of the beginning of the spout 221 in the inside 223 of the milking claw housing 202. The side surface of the piston 212 fittingly abuts the upper edge 206, wherein the recess 219 keeps a downward passage free.

In the position of figure 8 it is achieved that substances, such as cleansing agent coming from the teat cups and/or rinse water coming from the teat cups, do not end up in the -presently closed off- milk discharge line 121, but at the lowest point of the milking claw housing 202, via the passage 226, 227 and 236 flow out of the milking claw device 201.

Additional security against contamination can be achieved when in the expanded condition of the piston, shown in figure 8, the line 162 is also activated, as a result of which air/water mixture ends up in the space above the piston 212 via the spout 262 (see figures 7 and 8), the passage 263, and the passage 264 and is squirted out in the inner space 223 of the milking claw housing 202, via the passage 214, the one-way valve 215, the ducts 216 and outlets 216a. In this way the inside 223 of the milking claw housing 202 is rinsed. The rinse water flows back of its own accord, to the bottom area of the milking claw housing 202 and deflects in the same manner as described above, via the passages 226, 227 and 236. Thus it is achieved that the entire path of teat cup, milk tube, connection for it and collection chamber can be cleansed/rinsed. In addition or alternatively cleansing agent, such as iodine, can be supplied, if a suitable connection for it is provided on the upper part 250, which connection is then connected to the passage 263/264. Optionally the connection 262 can be used for that purpose, in that case connected to a source for cleansing liquid.

After the rinsing course the tube 161 is put at a vacuum, as a result of which the piston 212 will move upwards. The one-way valve 215 prevents that air is sucked in from the inside 223. After the piston 212 has returned to the position of figure 6, and under the influence of the compression spring 230 the valve 228 has also moved back to close off the opening 226 liquid-tight, a next milking course can be started. Due to the shape of the small convex surface 218a it is counteracted that contamination is left behind on the retracted piston 212.

In the embodiments discussed above, the valve 28, 228 is upwardly pre-biassed by a compression spring 30, 230 within the sleeve 29, 229. Alternatively a central pin oriented downwards has been formed below the disk 27, 227, which pin with its end rests in a bowl-shaped recess in a straight leaf spring. Said leaf spring may with its ends for instance be confined in recesses in the collars 33, 233 on which the cap 32, 232 has been secured.

In the embodiments discussed above, the ducts 16, 216 in the piston 12, 212 are oriented upwardly radially inclined and radially horizontally oriented. Alternatively or in combination therewith ducts are provided that are oriented radially downwards. Per direction one or more ducts may be provided in circumferential direction, for instance four ducts per circumference in the same direction. The overall number of ducts may vary from for instance four to thirty-two ducts.

## Claims

1. Milking claw device (1; 201) for a milking device, provided with a number of first connections (5a-5d; 205a-205d) for milk supply lines (105a-105d) originating from teat cups, a collection chamber (23; 223) that is in fluid connection with the first connections, and a second connection (21; 221) in fluid connection with the collection chamber for a communal milk discharge line (121), for according to flow paths allowing milk originating from the teat cups to pass through, wherein the milking claw device has been provided with interception means (12, 28; 212, 228) for leading a fluid flow originating from a milk supply line away from the flow paths, wherein the interceptions means comprise a first valve (12; 212) for the second connection or part of the milk discharge line connected thereto, **characterized in that** the interception means comprise a discharge (26; 226) and a second valve (28; 228) for it, wherein the second valve is positioned to be operated by the first valve, wherein the second valve is positioned to be moved to the open position by moving the first valve to the closing position, wherein the first valve (12; 212) with its movement to its closing position makes a free stroke with respect to the second valve (28; 228) and moves the second valve to its open position after said free stroke.

2. Milking claw device according to claim 1 wherein the first valve (12; 212) is active upstream from or in the second connection (21; 221).

3. Milking claw device according to claim 1 or 2, wherein the interception means (12, 28; 212; 228) have been arranged to be active in a bottom area of the collection chamber (23; 223).

4. Milking claw device (1; 201) according to any one of the preceding claims, wherein the second valve (28; 228) is biassed to a closed position.

5. Milking claw device (1; 201) according to any one of the preceding claims, comprising a milking claw housing (2; 202) forming the collection chamber (23; 223) and also provided with the first connections, and/or the second connection, wherein the interception means (12, 28; 212; 228) have been arranged in or on the housing.

6. Milking claw device (1; 201) according to any one of the preceding claims, wherein the first valve (12; 212) comprises a barrier body (12; 212), also provided with operation means (60; 260) for moving the barrier body between an inactive position, in which the flow paths are through-going, and an active position, in which the flow paths are interrupted and a diversion passage (26; 226) has been realised, wherein the barrier body preferably comprises a reciprocally movable body, such as a piston.

7. Milking claw device (1; 201) according to claims 5 and 6, wherein the milking claw housing (2; 202) has an upper part (4; 204), on which connections for lines for operation, and/or for cleansing/rinsing the teat cups have been arranged, running to the teat cups and to air sources, and/or cleansing/rinsing liquid sources, wherein the operation means (60; 260) for the barrier body have at least partially been arranged in the upper part of the milking claw housing, wherein the upper part (4; 204) preferably forms a part, optionally including lid, that can be placed separately, preferably removably, on the milking claw housing.

8. Milking claw device (1; 201) according to claim 6 or 7, wherein the barrier body (12; 212) is situated centrally with respect to the collection chamber (23; 223).

9. Milking claw device (1; 201) according to claims 5 and 6, wherein the milking claw housing (2; 202) comprises an upper half (4; 204) with the first connections and the operation means, and a lower half (3; 203) with the second connection (21; 221) and a transitional surface from the collection chamber to the access of the second connection, which transitional surface as regards shape mates the barrier body (12; 212), wherein the lower half and the upper half are detachably connected to each other and positioned by means of a circumferential closure (25; 225) extending about the collection chamber, wherein the operation means (60; 260) are adapted for keeping the barrier body positioned in the active position with respect to the transitional surface, wherein the operation means preferably are adapted for keeping a side wall of the barrier body extending in the direction of movement, against the transitional surface, and/or wherein the circumferential closure preferably extends substantially circularly around the collection chamber.

10. Milking claw device (1; 201) according to any one of the preceding claims, provided with means (56; 256) for supplying cleansing, and/or rinsing liquid to the collection chamber.

11. Milking claw device (1; 201) according to claim 10, wherein the means (56; 256) for supplying cleansing, and/or rinsing liquid have been arranged spaced apart from the interception means (12, 28; 212; 228).

12. Milking claw device (1; 201) according to claim 10, wherein the means (56; 256) for supplying cleansing, and/or rinsing liquid have been arranged near or at the location of the interception means (12, 28; 212; 228).

13. Milking claw device (1; 201) according to claim 10, 11 or 12 wherein the means (56; 256) for supplying cleansing, and/or rinsing liquid have been provided with outlets (16a, 16b; 216a, 216b) directed at the first connections (5a-5d; 205a-205d), and/or wherein the means (56; 256) for supplying cleansing, and/or rinsing liquid comprise outlets (16a, 16b; 216a, 216b) that have been provided on the first valve (12; 212).

14. Method for milking cows, using a milking claw (1; 201) provided with teat cups and connected to a milk discharge line (121), **characterized in that** the milking claw is furthermore provided with a branch passage (26; 226) for discharging liquid from the milking claw device (1; 201) and with a first valve (12; 212) for the milk discharge line (121) which valve is active downstream from the branch passage (26, 226) wherein the teat cups are placed on a first cow, the first cow is milked, the milking is terminated, the teat cups are removed from the cow and the milking claw (1; 201) is rinsed with a cleansing, and/or rinsing liquid, the cleansing, and/or rinsing liquid is discharged from the milking claw, outside the discharge line (121) through the branch passage (26; 226), and the milking claw with the teat cups is placed on a second cow after which the aforementioned steps are repeated.

## Patentansprüche

1. Milchsammelvorrichtung (1; 201) für eine Melkvorrichtung, ausgestattet mit einer Anzahl erster Anschlussstücke (5a - 5d; 205a - 205d) für Milchentnahmeleitungen (105a - 105d), die an den Zitzenbechern beginnen, einer Sammelkammer (23; 223), die in Fließverbindung mit den ersten Anschlussstücken steht, und einem zweiten Anschlussstück (21; 221) in Fließverbindung mit der Sammelkammer für eine gemeinsame Milchförderleitung (121), um es Milch, die aus den Zitzenbechern kommt, entsprechend den Fließwegen zu gestatten hindurchzutreten, wobei die Milchsammelvorrichtung mit Unterbrechungsmitteln (12, 28; 212, 228) ausgestattet wurde, um einen Flüssigkeitsfluss, der aus einer Milchentnahmeleitung stammt von den Fließwegen wegzuführen, wobei die Unterbrechungsmittel ein erstes Ventil (12; 212) für das zweite Anschlussstück oder einen Teil der Milch-Förderleitung, die daran angeschlossen ist, umfasst, dadurch charakterisiert, dass die Unterbrechungsmittel einen Auslass (26, 226) und ein zweites Ventil (28; 228) dafür umfassen, wobei das zweite Ventil so positioniert ist, dass es durch das erste Ventil betrieben wird, wobei das zweite Ventil so positioniert ist, dass es in die offene Position bewegt wird, indem das erste Ventil in die geschlossene Position bewegt wird, wobei das erste Ventil (12; 212) mit seiner Bewegung in dessen geschlossene Position in Bezug auf das zweite Ventil (28; 228) einen freien Hub durchläuft und nach diesem freien Hub das zweite Ventil in dessen offene Position bewegt.

2. Milchsammelvorrichtung gemäß Anspruch 1, wobei das erste Ventil (12; 212) innerhalb oder oberhalb des zweiten Anschlussstücks (21; 221) aktiv ist.

3. Milchsammelvorrichtung gemäß Anspruch 1 oder 2, wobei die Unterbrechungsmittel (12, 28; 212, 228) so angeordnet sind, dass sie in einem unteren Bereich der Sammelkammer (23; 223) aktiv sind.

4. Milchsammelvorrichtung (1; 201) gemäß einem der vorhergehenden Ansprüche, wobei das zweite Ventil (28; 228) in Richtung auf eine geschlossene Position vorgespannt ist.

5. Milchsammelvorrichtung (1; 201) gemäß einem der vorhergehenden Ansprüche, umfassend ein Milchsammelgehäuse (2; 202), das die Sammelkammer (23; 223) bildet und auch mit den ersten Anschlussstücken und/oder dem zweiten Anschlussstück ausgestattet ist, wobei die Unterbrechungsmittel (12, 28; 212, 228) in oder an dem Gehäuse angeordnet wurden.

6. Milchsammelvorrichtung (1; 201) gemäß einem der vorhergehenden Ansprüche, wobei das erste Ventil (12; 212) einen Sperrkörper (12; 212) umfasst, außerdem ausgestattet mit einem Betriebsmittel (60; 260) zum Bewegen des Sperrkörpers zwischen einer inaktiven Position, in der die Fließwege durchgängig sind, und einer aktiven Position, in der die Fließwege unterbrochen sind und ein Umleitungs-Durchlauf realisiert wurde, wobei der Sperrkörper bevorzugt einen wechselseitig beweglichen Körper, wie z. B. einen Kolben, umfasst.

7. Milchsammelvorrichtung (1; 201) gemäß den Ansprüchen 5 und 6, wobei das Milchsammelgehäuse (2; 202) einen oberen Teil (4; 204) aufweist, an dem Anschlussstücke für Leitungen zum Betreiben und/oder Reinigen/Spülen der Zitzenbecher angeordnet wurden, die zu den Zitzenbechern und zu Luftquellen und/oder zu Reinigungs-/Spülflüssigkeitsquellen führen, wobei das Betriebsmittel (60; 260) für den Sperrkörper wenigstens teilweise in dem oberen Teil des Milchsammelgehäuses angeordnet wurde, wobei der obere Teil (4; 204) bevorzugt ein Bauteil ausbildet, das optional einen Deckel umfasst, das gesondert, bevorzugt entfernbar, auf dem Milchsammelgehäuse plaziert werden kann.

8. Milchsammelvorrichtung (1; 201) gemäß den Ansprüchen 6 oder 7, wobei der Sperrkörper (12; 212), in Bezug auf die Sammelkammer (23; 223) zentral untergebracht ist.

9. Milchsammelvorrichtung (1; 201) gemäß den Ansprüchen 5 und 6, wobei das Milchsammelgehäuse (2; 202) eine obere Hälfte (4; 204) mit den ersten Anschlüssen und dem Betriebsmittel und eine untere Hälfte (3; 203) mit dem zweiten Anschlussstück (21; 221), und eine Übergangsfläche von der Sammelkammer zu dem Zugang des zweiten Anschlussstücks umfasst, wobei diese Übergangsfläche bezüglich der Form mit dem Sperrkörper (12; 212) zusammenpasst, wobei die untere und die obere Hälfte miteinander lösbar verbunden sind und mit Hilfe einer umlaufenden Verschlussvorrichtung (25; 225), die sich über die Sammelkammer erstreckt, zueinander angeordnet sind, wobei das Betriebsmittel (60; 260) so angepasst ist, dass es den Sperrkörper in Bezug auf die Übergangsfläche in der aktiven Position angeordnet hält, wobei das Betriebsmittel bevorzugt geeignet ist, eine Seitenwand des Sperrkörpers, der sich in die Bewegungsrichtung erstreckt, an der Übergangsfläche zu halten und/oder wobei die umlaufende Verschlussvorrichtung sich bevorzugt um die Sammelkammer herumlaufend erstreckt.

10. Milchsammelvorrichtung (1; 201) gemäß einem der vorhergehenden Ansprüche, die mit Mitteln (56; 256) zum Abgeben einer Reinigungs- und/oder Spülflüssigkeit an die Sammelkammer ausgestattet ist.

11. Milchsammelvorrichtung (1; 201) gemäß Anspruch 10, wobei die Mittel (56; 256) zum Abgeben einer Reinigungs- und/oder Spülflüssigkeit von den Unterbrechungsmittel (12, 28; 212, 228) beabstandet angeordnet wurden.

12. Milchsammelvorrichtung (1; 201) gemäß Anspruch 10, wobei die Mittel (56; 256) zum Abgeben einer Reinigungs- und/oder Spülflüssigkeit nahe den oder an der Stelle der Unterbrechungsmittel (12, 28; 212, 228) angeordnet wurden.

13. Milchsammelvorrichtung (1; 201) gemäß Anspruch 10, 11 oder 12, wobei die Mittel (56; 256) zum Abgeben einer Reinigungs- und/oder Spülflüssigkeit mit Auslassöffnungen (16a, 16b; 216a, 216b) in Richtung auf die ersten Anschlussstücke (5a - 5d; 205a - 205d) ausgestattet wurden und/oder wobei die Mittel (56; 256) zum Abgeben einer Reinigungs- und/oder Spülflüssigkeit Auslassöffnungen (16a, 16b; 216a, 216b) umfassen, die an dem ersten Ventil (12; 212) vorgesehen wurden.

14. Verfahren zum Melken von Kühen unter Verwendung einer Milchsammelvorrichtung (1; 201), die mit Zitzenbechern ausgestattet ist und an eine Milchförderleitung (121) angeschlossen ist, dadurch charakterisiert, dass die Milchfördervorrichtung außerdem mit einem Verzweigungsdurchlass (26; 226) zum Fördern einer Flüssigkeit aus der Milchsammelvorrichtung (1; 201) und mit einem ersten Ventil (12; 212) für die Milchförderleitung (121) ausgestattet ist, wobei das Ventil nach dem Verzweigungsdurchlass (26; 226) aktiv ist, wobei die Zitzenbecher an einer ersten Kuh angebracht werden, die erste Kuh gemolken wird, das Melken beendet wird, die Zitzenbecher von der Kuh entfernt werden und die Milchsammelvorrichtung (1; 201) mit einer Reinigungs- und/oder Spülflüssigkeit gespült wird, die Reinigungs- und/oder Spülflüssigkeit aus der Milchsammelvorrichtung außerhalb der Förderleitung (121) durch den Verzweigungsdurchlass (26; 226) ausgeführt wird und die Milchsammelvorrichtung mit den Zitzenbechern an einer zweiten Kuh angebracht wird, wonach die zuvor beschriebenen Schritte wiederholt werden.

## Revendications

1. Dispositif de griffe de traite (1 ; 201) pour un dispositif de traite, doté d'un nombre de premières connexions (5a-5d ; 205a-205d) pour des conduites d'alimentation en lait (105a-105d) provenant de gobelets trayeurs, une chambre de collecte (23 ; 223) qui est en connexion fluidique avec les premières connexions, et une seconde connexion (21 ; 221) en connexion fluidique avec la chambre de collecte pour une conduite de sortie de lait collective (121) pour permettre, selon les voies d'écoulement, au lait provenant des gobelets trayeurs de passer au travers, dans lequel le dispositif de griffe de lait a été doté de moyens d'interception (12, 28 ; 212, 228) pour mener un flux de fluide provenant d'une conduite d'alimentation en lait loin des voies d'écoulement, dans lequel les moyens d'interception comprennent une première valve (12 ; 212) pour la seconde connexion ou partie de la conduite de sortie de lait reliée à celle-ci, **caractérisé en ce que** les moyens d'interception comprennent une sortie (26 ; 226) et une seconde valve (28 ; 228) pour elle, dans lequel la seconde valve est positionnée pour être actionnée par la première valve, dans lequel la seconde valve est positionnée pour être déplacée vers la position ouverte en déplaçant la première valve dans la position de fermeture, dans lequel la première valve (12 ; 212) avec son mouvement vers sa position de fermeture réalise une course libre par rapport à la seconde valve (28 ; 228) et déplace la seconde valve vers sa position ouverte après ladite course libre.

2. Dispositif de griffe de traite selon la revendication 1, dans lequel la première valve (12 ; 212) est active en amont de la seconde connexion (21 ; 221) ou dans celle-ci.

3. Dispositif de griffe de traite selon la revendication 1 ou 2, dans lequel les moyens d'interception (12, 28 ; 212 ; 228) ont été agencés pour être actifs dans une zone inférieure de la chambre de collecte (23 ; 223).

4. Dispositif de griffe de traite (1 ; 201) selon l'une quelconque des revendications précédentes, dans lequel la seconde valve (28 ; 228) est inclinée vers une position fermée.

5. Dispositif de griffe de traite (1 ; 201) selon l'une quelconque des revendications précédentes, comprenant un boîtier de griffe de traite (2 ; 202) formant la chambre de collecte (23 ; 223) et doté aussi des premières connexions et/ou de la seconde connexion, dans lequel les moyens d'interception (12, 28 ; 212 ; 228) ont été agencés dans le boîtier ou sur celui-ci.

6. Dispositif de griffe de traite (1 ; 201) selon l'une quelconque des revendications précédentes, dans lequel la première valve (12 ; 212) comprend un corps barrière (12 ; 212) doté aussi de moyens de fonctionnement (60 ; 260) pour le déplacement du corps barrière entre une position inactive, dans laquelle les voies d'écoulement sont continues, et une position active, dans laquelle les voies d'écoulement sont interrompues et un passage de diversion (26 ; 226) a été réalisé, dans lequel le corps barrière comprend de préférence un corps mobile alternativement tel qu'un piston.

7. Dispositif de griffe de traite (1 ; 201) selon les revendications 5 et 6, dans lequel le boîtier de griffe de traite (2 ; 202) a une partie supérieure (4 ; 204), sur laquelle des connexions pour des conduites pour le fonctionnement et/ou pour le nettoyage et le rinçage des gobelets trayeurs ont été agencées, s'étendant vers les gobelets trayeurs et vers les sources d'air, et/ou les sources de liquide de nettoyage et de rinçage, dans lequel les moyens de fonctionnement (60 ; 260) pour le corps barrière ont été agencés au moins partiellement dans la partie supérieure du boîtier de griffe de traite, dans lequel la partie supérieure (4 ; 204) forme de préférence une partie, comportant en option un couvercle qui peut être placé séparément, de préférence de manière amovible sur le boîtier de griffe de traite.

8. Dispositif de griffe de traite (1 ; 201) selon la revendication 6 ou 7, dans lequel le corps barrière (12 ; 212) est situé centralement par rapport à la chambre de collecte (23 ; 223).

9. Dispositif de griffe de traite (1 ; 201) selon les revendications 5 et 6, dans lequel le boîtier de griffe de traite (2 ; 202) comprend une moitié supérieure (4 ; 204) avec les premières connexions et les moyens de fonctionnement, et une moitié inférieure (3 ; 203) avec la seconde connexion (21 ; 221) et une surface de transition de la chambre de collecte à l'accès de la seconde connexion, laquelle surface de transition en ce qui concerne la forme s'accouple au corps barrière (12 ; 212), dans lequel la moitié inférieure et la moitié supérieure sont reliées de manière détachable l'une à l'autre et positionnées à l'aide d'une fermeture circonférentielle (25 ; 225) s'étendant autour de la chambre de collecte, dans lequel les moyens de fonctionnement (60 ; 260) sont adaptés pour maintenir le corps barrière positionné dans la position active par rapport à la surface de transition, dans lequel les moyens de fonctionnement sont de préférence adaptés pour maintenir une paroi latérale du corps barrière s'étendant dans la direction de mouvement, contre la surface de transition et/ou dans lequel la fermeture circonférentielle s'étend de préférence sensiblement en cercle autour de la chambre de collecte.

10. Dispositif de griffe de traite (1 ; 201) selon l'une quelconque des revendications précédentes, doté de moyens (56 ; 256) pour amener du liquide de nettoyage et/ou de rinçage à la chambre de collecte.

11. Dispositif de griffe de traite (1 ; 201) selon la revendication 10, dans lequel les moyens (56 ; 256) pour amener du liquide de nettoyage et/ou de rinçage ont été agencés à distance des moyens d'interception (12, 28 ; 212 ; 228).

12. Dispositif de griffe de traite (1 ; 201) selon la revendication 10, dans lequel les moyens (56 ; 256) pour amener du liquide de nettoyage et/ou de rinçage ont été agencés près ou à l'endroit des moyens d'interception (12, 28 ; 212 ; 228).

13. Dispositif de griffe de traite (1 ; 201) selon la revendication 10, 11 ou 12, dans lequel les moyens (56 ; 256) pour amener du liquide de nettoyage et/ou de rinçage ont été dotés de sorties (16a, 16b ; 216a, 216b) dirigées sur les premières connexions (5a-5d ; 205a-205d) et/ou dans lequel les moyens (56 ; 256) pour amener du liquide de nettoyage et/ou de rinçage comprennent des sorties (16a, 16b ; 216a, 216b) qui ont été ménagées sur la première valve (12 ; 212).

14. Méthode de traite de vaches en utilisant une griffe de traite (1 ; 201) dotée de gobelets trayeurs et reliée à une conduite de sortie de lait (121), **caractérisée en ce que** la griffe de lait est de plus dotée d'un passage de branche (26 ; 226) pour la sortie de liquide du dispositif de griffe de traite (1 ; 201) et d'une première valve (12 ; 212) pour la conduite de sortie de lait (121), laquelle valve est active en aval du passage de branche (26, 226), dans laquelle les gobelets trayeurs sont placés sur une première vache, la première vache est traite, la traite est terminée, les gobelets trayeurs sont retirés de la vache et la griffe de traite (1 ; 201) est rincée avec un liquide de nettoyage et/ou de rinçage, le liquide de nettoyage et/ou de rinçage est évacué de la griffe de traite en dehors de la conduite de sortie (121) par le passage de branche (26 ; 226) et la griffe de traite avec les gobelets trayeurs est placée sur une seconde vache, après quoi les étapes susmentionnées sont répétées.
